# EUROPÄISCHE PATENTANMELDUNG

(11) **EP 4 385 953 A1**
(43) Veröffentlichungstag der Anmeldung: **19.06.2024**
(21) Anmeldenummer: 23214703.3
(22) Anmeldetag: 06.12.2023
(51) Int. Cl.: C02F 1/32

(54) **VERFAHREN UND REAKTORVORRICHTUNG ZUM DESINFIZIEREN VON WASSER MITTELS UV-BELEUCHTUNG**

(30) Priorität: 12.12.2022 DE 102022133017
(71) Anmelder: Hytecon AG, 6006 Luzern (CH)
(72) Erfinder: Klink, Maximilian, 6006 Luzern (CH)
(74) Vertreter: Bittner, Thomas L.

(57) **Zusammenfassung**

Die Erfindung betrifft Verfahren zum Desinfizieren von Wasser wie Trinkwasser, Abwasser, Brauchwasser oder Prozesswasser mittels UV-Beleuchtung in einer Reaktorvorrichtung (1), bei dem zu desinfizierendes Wasser über einen Einlass (3) in einem Reaktorraum (2) der Reaktorvorrichtung (1) eingebracht, das zu desinfizierende Wasser in dem Reaktorraum (2) mittels einer UV-Beleuchtungseinrichtung (5) mit UV-Licht beleuchtet und desinfiziertes Wasser über einen Auslass (4) aus dem Reaktorraum (2) abgeführt wird, wobei weiterhin Folgendes vorgesehen ist: Bereitstellen des UV-Lichts mittels einer Anordnung von UV-Licht emittierenden Dioden der UV-Beleuchtungseinrichtung (5) der Reaktorvorrichtung (1); Betreiben der UV-Licht emittierenden Dioden mittels einer der Anordnung von UV-Licht emittierenden Dioden zugeordneten Treibereinrichtung (6; 7) der Reaktorvorrichtung (1); Steuern eines Betriebs der Treibereinrichtung (6; 7) mittels einer Steuereinrichtung (9) der Reaktorvorrichtung (1); Überwachen mindestens eines elektrischen Betriebsparameters für die Anordnung von UV-Licht emittierenden Dioden beim Desinfizieren des Wassers mittels des UV-Lichts mit Hilfe einer Überwachungseinrichtung (10) der Reaktorvorrichtung (1), die mit der Steuereinrichtung (9) verbunden ist; Vergleichen eines aktuellen Messwertes für den mindestens einen elektrischen Betriebsparameter, welcher mittels der Überwachungseinrichtung (10) erfasst wird, mit einem Vergleichswert für den mindestens einen elektrischen Betriebsparameter; Erzeugen von Steuersignalen in Abhängigkeit vom Ergebnis des Vergleichs von aktuellem Messwert und Vergleichswert für den mindestens einen elektrischen Betriebsparameter mittels der Steuereinrichtung (9); und Steuern des Betriebs der Reaktorvorrichtung (1) gemäß den Steuersignalen. Weiterhin ist eine Reaktorvorrichtung (1) vorgesehen.

## Beschreibung

Die Erfindung betrifft ein Verfahren sowie eine Reaktorvorrichtung zum Desinfizieren von Wasser wie Trinkwasser, Abwasser, Brauchwasser oder Prozesswasser mittels UV-Beleuchtung.

### Hintergrund

UV-Licht kann genutzt werden, um Wasser zu desinfizieren. Hierbei wird üblicherweise das zu desinfizierende Wasser über einen Einlass in einem Reaktorraum eingebracht und während seines Aufenthalts in dem Reaktorraum mit UV-Licht beleuchtet, welches von einer UV-Beleuchtungseinrichtung bereitgestellt wird. Über einen Auslass verlässt das desinfizierte Wasser den Reaktorraum und wird seiner jeweiligen Verwendung zugeführt. Zum Erzeugen des UV-Lichts sind die UV-Beleuchtungseinrichtungen mit Gasentladungslampen und / oder UV-Licht emittierenden Dioden (UV-LED) gebildet.

Insbesondere in Verbindung mit großtechnischen Anlagen zur Wasseraufbereitung, zum Beispiel bei Anlagen für die öffentliche Trinkwasserversorgung oder der Bereitstellung von Prozesswasser für industrielle Anwendungen, ist es von besonderer Bedeutung, dass die mittels UV-Licht ausgeführte Desinfektion des Wassers den jeweils geforderten Vorgaben entsprechend durchgeführt wird.

Dokument DE 20 2020 100 960 U1 betrifft eine Vorrichtung zur Desinfektion eines Fluids, vorzugsweise von Wasser, aufweisend: einen Fluidpfad, durch den das zu desinfizierende Fluid befördert wird, und eine Strahlungsquelle zur Erzeugung von Strahlung, die desinfizierend wirkt, wobei die die Strahlungsquelle relativ zum Fluidpfad derart angeordnet ist, dass das Fluid mit der Strahlung während des Förderns beaufschlagt wird, dadurch gekennzeichnet, dass die Strahlungsquelle wenigstens eine UV-LED aufweist.

In dem Dokument DE 198 24 423 A1 ist eine Schaltungsanordnung zum Betreiben einer UV-Lampe in einem Entkeimungsreaktor offenbart. Das Dokument DE 10 2020 108 265 A1 offenbart eine Vorrichtung zum Desinfizieren eines Fluids mit UV-LEDs.

### Zusammenfassung

Aufgabe der Erfindung ist es, ein Verfahren sowie eine Reaktorvorrichtung zum Desinfizieren von Wasser wie Trinkwasser, Abwasser, Brauchwasser oder Prozesswasser mittels UV-Beleuchtung anzugeben, mit denen eine verbesserte Überwachung der korrekten Durchführung des Desinfektionsprozesses ermöglicht ist.

Zur Lösung sind ein Verfahren sowie eine Reaktorvorrichtung zum Desinfizieren von Wasser wie Trinkwasser, Abwasser, Brauchwasser oder Prozesswasser mittels UV-Beleuchtung gemäß den unabhängigen Ansprüchen 1 und 11 geschaffen. Ausgestaltungen sind Gegenstand von abhängigen Unteransprüchen.

Nach einem Aspekt ist ein Verfahren zum Desinfizieren von Wasser wie Trinkwasser, Abwasser, Brauchwasser oder Prozesswasser mittels UV-Beleuchtung in einer Reaktorvorrichtung geschaffen, bei dem zu desinfizierendes Wasser über einen Einlass in einem Reaktorraum der Reaktorvorrichtung eingebracht, das zu desinfizierende Wasser in dem Reaktorraum mittels einer UV-Beleuchtungseinrichtung mit UV-Licht beleuchtet und desinfiziertes Wasser über einen Auslass aus dem Reaktorraum abgeführt wird. Bei dem Verfahren ist weiterhin Folgendes vorgesehen: Bereitstellen des UV-Lichts mittels einer Anordnung von UV-Licht emittierenden Dioden der UV-Beleuchtungseinrichtung der Reaktorvorrichtung; Betreiben der UV-Licht emittierenden Dioden mittels einer der Anordnung von UV-Licht emittierenden Dioden zugeordneten Treibereinrichtung der Reaktorvorrichtung; Steuern eines Betriebs der Treibereinrichtung mittels einer Steuereinrichtung der Reaktorvorrichtung; Überwachen mindestens eines elektrischen Betriebsparameters für die Anordnung von UV-Licht emittierenden Dioden beim Desinfizieren des Wassers mittels des UV-Lichts mit Hilfe einer Überwachungseinrichtung der Reaktorvorrichtung, die mit der Steuereinrichtung verbunden ist; Vergleichen eines aktuellen Messwertes für den mindestens einen elektrischen Betriebsparameter, welcher mittels der Überwachungseinrichtung erfasst wird, mit einem Vergleichswert für den mindestens einen elektrischen Betriebsparameter; Erzeugen von Steuersignalen in Abhängigkeit vom Ergebnis des Vergleichs von aktuellem Messwert und Vergleichswert für den mindestens einen elektrischen Betriebsparameter mittels der Steuereinrichtung; und Steuern des Betriebs der Reaktorvorrichtung gemäß den Steuersignalen.

Nach einem weiteren Aspekt ist eine Reaktorvorrichtung zum Desinfizieren von Wasser wie Trinkwasser, Abwasser, Brauchwasser oder Prozesswasser mittels UV-Beleuchtung geschaffen, welche Folgendes aufweist: einen Reaktorraum zum Aufnehmen von zu desinfizierendem Wasser; eine UV-Beleuchtungseinrichtung mit einer Anordnung von UV-Licht emittierenden Dioden zum UV-Beleuchten des zu desinfizierenden Wassers in dem Reaktorraum; eine Treibereinrichtung, die der Anordnung von UV-Licht emittierenden Dioden zugeordnet ist; eine Überwachungseinrichtung und eine Steuereinrichtung, die mit der Überwachungseinrichtung und der Treibereinrichtung verbunden ist. Die Reaktorvorrichtung ist für Folgendes eingerichtet: Zuführen des zu desinfizierenden Wassers über einen Einlass in dem Reaktorraum, Beleuchten oder Bestrahlen des zu desinfizierenden Wassers mit UV-Licht in dem Reaktorraum mittels der UV-Beleuchtungseinrichtung und Abführen von desinfiziertem Wasser über einen Auslass aus dem Reaktorraum; Bereitstellen des UV-Lichts mittels der Anordnung von UV-Licht emittierenden Dioden; Betreiben der UV-Licht emittierenden Dioden mittels der zugeordneten Treibereinrichtung; Steuern eines Betriebs der Treibereinrichtung mittels der Steuereinrichtung; Überwachen mindestens eines elektrischen Betriebsparameters für die Anordnung von UV-Licht emittierenden Dioden beim Desinfizieren des Wassers mittels des UV-Lichts mit Hilfe der Überwachungseinrichtung; Vergleichen eines aktuellen Messwertes für den mindestens einen elektrischen Betriebsparameter, welcher mittels der Überwachungseinrichtung erfasst wird, mit einem Vergleichswert für den mindestens einen elektrischen Betriebsparameter; Erzeugen von Steuersignalen in Abhängigkeit vom Ergebnis des Vergleichs von aktuellem Messwert und Vergleichswert für den mindestens einen elektrischen Betriebsparameter; und Steuern des Betriebs der Reaktorvorrichtung gemäß den Steuersignalen.

Bei dem Verfahren zum Desinfizieren von Wasser wird das UV-Licht mit Hilfe einer Anordnung von UV-Licht emittierenden Dioden (UV-LED) der UV-Beleuchtungseinrichtung erzeugt. Es ist vorgesehen, den korrekten Betrieb der UV-Licht emittierenden Dioden mit Hilfe der Überwachungseinrichtung zu überwachen, derart, dass mindestens ein elektrischer Betriebsparameter für die Anordnung von UV-Licht emittierenden Dioden erfasst und ein hierbei erfasster aktueller Messwert für den Betriebsparameter mit einem Vergleichswert verglichen wird, so dass eine Übereinstimmung oder eine Abweichung des aktuellen Messwerts von dem Vergleichswert bestimmt werden kann. In Abhängigkeit von dem Vergleich von aktuellem Messwert und Vergleichswert werden Steuersignale mittels der Steuereinrichtung erzeugt, um basierend auf den Steuersignalen den Betrieb der Reaktorvorrichtung zu steuern. Zum Beispiel kann vorgesehen sein, mit den Steuersignalen bei der Reaktorvorrichtung den Betrieb der Anordnung von UV-Licht emittierenden Dioden zu steuern, insbesondere mittels Ansteuern der Treibereinrichtung mit Hilfe der erzeugten Steuersignale.

Auf diese Weise ist es zum Beispiel ermöglicht, die korrekte Arbeitsweise der UV-Beleuchtungseinrichtung unabhängig von der tatsächlichen Ausbereitung des UV-Lichts in dem Reaktorraum zu überwachen und zu steuern. Im Unterschied zu einer bekannten Prüfung der Transmission des UV-Lichts in dem Wasser im Reaktorraum ermöglicht das Überwachen des mindestens einen elektrischen Betriebsparameters die Erfassung einer direkten Kenngröße für den Betrieb der Anordnung der UV-Licht emittierenden Dioden. Die Steuereinrichtung kann so unmittelbar und direkt auf Abweichungen von Sollwerten (Vergleichswert) steuernd eingreifen. So kann in einem Ausführungsbeispiel anhand des Vergleiches von aktuellem Messwert und Vergleichswert festgestellt werden, ob noch alle zum Betrieb eingeschalteten UV-Licht emittierenden Dioden arbeiten oder diese teilweise ausgefallen sind. Hierauf kann die Steuereinrichtung beispielsweise Steuersignale erzeugen, welche die Abweichungen anzeigen, insbesondere zur Signalisierung an einen Nutzer.

Ultraviolettes Licht (UV-Licht) ist elektromagnetische Strahlung im Wellenlängenbereich von etwa 100 nm bis etwa 380 nm. Aufgrund der Zuordnung zur optischen Strahlung wird allgemein der Begriff "UV-Licht" verwendet. Der UV-Bereich kann in drei Klassen UV-A, UV-B und UV-C unterteilt werden. Der Bereich von etwa 200nm und etwa 280nm wird als UVC bezeichnet. In Verbindung mit dem Verfahren und der Reaktorvorrichtung zum Desinfizieren von Wasser kann vorgesehen sein, dass die UV-Licht emittierenden Dioden der UV-Beleuchtungseinrichtung eingerichtet sind, eine UVC-Beleuchtung oder -Bestrahlung bereitzustellen.

Die Reaktoreinrichtung kann als ein geschlossenes System mit einem geschlossenen Reaktorraum oder als ein offenes System mit einem offenen Reaktorraum ausgeführt sein, zum Beispiel ein Gerinne. Im jeweiligen Reaktorraum wird das zu desinfizierende Wasser aufgenommen und bestrahlt oder beleuchtet.

Es kann vorgesehen sein, eine UV-Beleuchtungseinrichtung zu verwenden, bei der die Anordnung von UV-Licht emittierenden Dioden an einem stabförmigen UV-Strahler ausgebildet ist, wobei ein Strahlerabschnitt mit der Anordnung von UV-Licht emittierenden Dioden zumindest abschnittsweise in das zu desinfizierende Wasser in dem Reaktorraum eintauchend angeordnet wird. Das teilweise oder vollständige Eintauchen des Strahlerabschnitts des stabförmigen UV-Strahlers in das zu desinfizierende Wasser unterstützt einen effizienten Einsatz des erzeugten UV-Lichts zum Desinfizieren des Wassers. Es kann vorgesehen sein, mehrere stabförmige UV-Strahler in dem Reaktorraum anzuordnen.

Bei der Ausführung der Reaktorvorrichtung als offenes System kann die UV-Beleuchtungseinrichtung derart ausgeführt sein, dass der oder die stabförmigen UV-Strahler in einer Öffnung des offenen Reaktorraums in das zu desinfizierende Wasser eintauchen, zum Beispiel von oben in ein offenes Gerinne. Bei mehreren UV-Strahlern können diese mit unterschiedlicher Tiefe in den Reaktorraum und so in das zu desinfizierende Wasser eintauchen. Hierbei kann ein Füllstand für das Wasser in dem Reaktorraum mittels einer Füllstandmesseinrichtung bestimmt werden, um die UV-Strahler in Abhängigkeit vom Füllstand zu betreiben, zum Beispiel den oder die UV-Strahler einzuschalten, die gerade mindestens teilweise ins Wasser eintauchen. So kann auf steigende und / oder sinkende Wasserstände reagiert werden.

Alternativ oder ergänzend kann vorgesehen sein, entlang der Länge der stabförmigen UV-Strahler die UV-Licht emittierenden Dioden abschnittsweise in Abhängigkeit vom gemessenen Füllstand zu betreiben, zum Beispiel nur die UV-Licht emittierenden Dioden einzuschalten, welche den Abschnitt mit einzuschalten, die im Bereich eines Abschnitts des UV-Strahlers angeordnet sind, welcher aktuell ins Wasser eintaucht.

Bei dem mindestens einen stabförmigen UV-Strahler kann vorgesehen sein, dass die UV-Licht emittierenden Dioden im Bereich des Strahlerabschnitts mit einem zugeordneten Kühlkörper verbunden sind, welcher eingerichtet ist, im Betrieb der UV-Licht emittierenden Dioden entstehende Wärme abzuführen. Der Kühlkörper kann teilweise mittels oder auf einer den UV-Licht emittierenden Dioden zugeordneten Platine ausgebildet sein.

Die Anordnung von UV-Licht emittierenden Dioden kann bei dem UV-Strahler in einem sich im Strahlerabschnitt erstreckenden Hüllrohr ausgebildet sein, welches UV-Licht durchlässige Fenster zum Abstrahlen des UV-Lichts aufweist. Das Hüllrohr kann im Wesentlichen vollständig aus einem Material sein, welches die Abstrahlung des UV-Lichts ermöglicht, zum Beispiel aus Quarzglas.

Es ist vorgesehen, eine UV-Beleuchtungseinrichtung zu verwenden, bei der die Anordnung von UV-Licht emittierenden Dioden mehrere Teilanordnungen von UV-Licht emittierenden Dioden aufweist, die einen jeweiligen UV-Strahler bilden und die im Betrieb der UV-Beleuchtungseinrichtung mittels der Treibereinrichtung getrennt voneinander betrieben und mittels der Steuereinrichtung getrennt voneinander gesteuert werden. Es ist vorgesehen, den mindestens einen elektrischen Betriebsparameter jeweils getrennt für die mehreren UV-Strahler zu erfassen, so dass eine individuelle Überwachung der jeweiligen Teilanordnung von UV-Licht emittierenden Dioden ermöglicht ist. Entsprechend erzeugt die Steuereinrichtung individuelle Steuersignale für die jeweilige Teilanordnung von UV-Licht emittierenden Dioden getrennt.

Beim Überwachen des mindestens einen elektrischen Betriebsparameters kann ein Strom- und / oder ein Spannungsmesswert für die Anordnung von UV-Licht emittierenden Dioden erfasst werden, welcher mit einem Strom- / Spannungsvergleichswert verglichen wird. Die Strom- und / oder Spannungsmesswerte können zum Beispiel den Ausfall eines Teils der Anordnung von UV-Licht emittierenden Dioden anzeigen.

Zum Überwachen des mindestens einen elektrischen Betriebsparameters und zum Vergleichen des aktuellen Messwerts kann eine Schaltungsanordnung mit einer Komparatorschaltung und einer Logikschaltung verwendet werden. Bei mehreren Teilanordnungen von UV-Licht emitterienden Dioden kann diesen jeweils eine Teil-Schaltungsanordnung mit Komperatorschaltung und Logikschaltung zugeordnet sein. Die Schaltungsanordnung oder Teile hiervon können in eine oder mehrere der folgenden Einrichtungen integriert sein: Überwachungseinrichtung, Treibereinrichtung und Steuereinrichtung.

Während des Betriebs der UV-Beleuchtungseinrichtung kann beim Überwachen der mindestens einen elektrischen Betriebsparameter für die Anordnung von UV-Licht emittierenden Dioden fortdauernd erfasst werden. Eine kontinuierliche, also zeitlich nicht unterbrochene Überwachung des mindestens einen elektrischen Betriebsparameters während des Betriebs der UV-Beleuchtungseinrichtung kann in einem Ausführungsbeispiel vorgesehen sein. Hierdurch kann in einer Ausgestaltung kontinuierlich in Echtzeit mittels der Steuersignale auf einen geänderten elektrischen Betriebsparameter reagiert werden.

Beim Vergleichen des aktuellen Messwertes mit dem Vergleichswert kann bestimmt werden, welcher Anteil der UV-Licht emittierenden Dioden der Anordnung nicht mehr funktionsfähig und/oder vermindert funktionsfähig ist. Zum Beispiel kann ein relativer Anteil der UV-Licht emittierenden Dioden bestimmt werden, der nicht mehr funktionsfähig und/oder vermindert funktionsfähig ist.

Hierbei kann eine nicht mehr gegebene und/oder verminderte Funktionsfähigkeit zum Beispiel festgestellt werden, wenn bestimmt wird, dass zumindest ein Teil der UV-Licht emittierenden Dioden eine verminderte Lichtleistung emittiert, die unterhalb eines Schwellwertes liegt. Die verminderte Lichtleistung kann beispielweise die Folge einer Alterung der UV-Licht emittierenden Dioden sein. Ähnlich ist bei Ausfall einer oder mehrerer der UV-Licht emittierenden Dioden eine Funktionsfähigkeit nicht mehr gegeben.

Beim Vergleichen des aktuellen Messwertes mit dem Vergleichswert kann bestimmt werden, ob der aktuelle Messwert einen Vergleichsschwellwert überschreitet oder unterschreitet, und ein Warnsignal kann erzeugt und über eine Ausgabeeinrichtung ausgegeben werden, welches eine Fehlfunktion der UV-Beleuchtungseinrichtung anzeigt. So kann beispielsweise festgestellt werden, ob der Anteil der UV-Licht emittierenden Dioden, die nicht mehr funktionsfähig sind, einen Schwellwert überschreitet, zum Beispiel einen Schwellwert, welcher einen Ausfall eines relativen Anteils von bis zu etwa 10% oder bis zu etwa 5% anzeigt, worauf Steuersignale zur Abgabe des Warnsignals und / oder einer Betriebsänderung erzeugt werden können, zum Beispiel kann die Zufuhr von weiteren Wasser über den Einlass mittels einer zugeordneten Ventileinrichtung gedrosselt oder ganz gestoppt werden, zumindest zweitweise.

Die Bestimmung des Überschreitens / Unterschreitens des Schwellwerts kann für mehrere Teilanordnungen von UV-Licht emittierenden Dioden jeweils separat oder für die gesamte Anordnung von UV-Licht emittierenden Dioden durchgeführt werden. Entsprechend kann das Warnsignal, die Fehlfunktion für ein oder mehrere Teilanordnungen oder die gesamte Anordnung von UV-Licht emittierenden Dioden anzeigen.

Die Reaktorvorrichtung kann eine großtechnische Einrichtung zur Desinfektion von Wasser sein, bei der das zu desinfizierende Wasser mit einem Mindestdurchsatz von etwa 2 m³ / h durch den Reaktorraum geführt wird. Solche großtechnischen Einrichtungen oder Anlagen betreffen zum Beispiel Reaktorvorrichtungen zum Bereitstellen der öffentlichen Wasserversorgung oder Reaktorvorrichtungen zum Bereitstellen von Prozess- oder Brauchwasser in industriellen Anlagen.

Es kann Folgendes vorgesehen sein: (i) Mit der Überwachungseinrichtung wird ein optischer Betriebsparameter erfasst, welcher für die Wellenlänge des UV-Lichts der UV-Licht emittierenden Dioden die Transmission in dem zu desinfizierenden Wasser anzeigt; (ii) ein aktueller Transmissionsmesswert wird mit einem Vergleichs-Transmissionswert verglichen; und (iii) die Steuersignale werden in Abhängigkeit vom Ergebnis des Vergleichs von aktuellem Transmissionsmesswert und Vergleichs-Transmissionswert erzeugt. Alternativ oder ergänzend kann ein Lichtintensitäts-Messwert bestimmt werden, insbesondere zur Bestimmung vom (aktuellen) Transmissionswert.

Insbesondere kann Folgendes vorgesehen sein: (i) Mit der Überwachungseinrichtung wird ein optischer Betriebsparameter erfasst, welcher für die Wellenlänge des UV-Lichts der UV-Licht emittierenden Dioden die Transmission in dem zu desinfizierenden Wasser anzeigt; (ii) ein aktueller Lichtintensitätswert wird mit einem Vergleichs-Lichtintensitätswert verglichen; und (iii) die Steuersignale werden in Abhängigkeit vom Ergebnis des Vergleichs von aktuellem Lichtintensitätswert und Vergleichs-Lichtintensitätswert erzeugt.

Bei dieser Ausführungsform wird die Überwachung des mindestens einen elektrischen Betriebsparameters ergänzt durch die Überwachung wenigstens eines optischen Betriebsparameters für den Betrieb der UV-Beleuchtungseinrichtung, wobei hierbei die Ausbreitung des UV-Lichts in dem zu desinfizierenden Wasser gemessen wird. Hierbei ist eine spektral schmalbandige Überwachung der Transmission für (nur) die Wellenlänge des von dem UV-Licht emittierenden Dioden abgegebenen UV-Lichts vorgesehen, beispielsweise bei einer Wellenlänge von 254nm.

Bei bekanntem Transmissionsverhalten des Wassers für das UV-Licht kann die gemessene Transmission ergänzend Informationen über den korrekten Betrieb der UV-Licht emittierenden Dioden anzeigen. Diese Information kann dann beim Erzeugen der Steuersignale ergänzend herangezogen werden. So kann vorgesehen sein, dass ein Warnsignal betreffend den zumindest teilweisen Ausfall von UV-Licht emittierenden Dioden nur dann erzeugt wird, wenn sowohl der mindestens eine elektrische Betriebsparameter wie auch der optische Betriebsparameter dies anzeigen. Auf diese Weise wird die Betriebssicherheit erhöht.

Es kann vorgesehen sein, dass die Transmission und/oder Lichtintensität mittels eines (kalibrierbaren) optischen Sensors erfasst wird, welcher randseitig am Reaktorraum angeordnet ist. Ergänzend oder alternativ können weitere optische Sensoren innerhalb des Reaktorraums zur Erfassung von Transmission(en) und/oder Lichtintensität(en), etwa verschiedener UV-Licht emittierender Dioden, angeordnet sein.

Die weiteren optischen Sensoren können beispielsweise an der Anordnung von UV-Licht emittierenden Dioden und/oder den (stabförmigen) UV-Strahlern angeordnet sein. Insbesondere können die weiteren optischen Sensoren zwischen Teilanordnungen von UV-Licht emittierenden Dioden (eines UV-Strahlers) angeordnet sein, etwa auf einer gemeinsamen LED-Platine. Weiteren optische Sensoren eines ersten UV-Strahlers können eingerichtet sein, Transmissionen von UV-Licht emittierenden Dioden eines zweiten UV-Strahlers (welcher vom ersten UV-Strahler verschieden ist) zu erfassen. Auf diese Weise kann ein Netzwerk von Sensoren bereitgestellt werden, mit welchem Transmissions- und/oder Intensitätsänderungen verbessert erfasst werden können und eine präzisere Regelung ermöglicht wird. Es kann vorgesehen sein, dass die weiteren optische Sensoren eines UV-Strahlers gegenüber den UV-Licht emittierenden Dioden des (selben) UV-Strahlers zumindest teilweise optisch abgeschirmt sind.

Der Sensorwert des (kalibrierbaren) optischen Sensors kann mit weiteren Sensorwerten der weiteren optischen Sensoren verglichen werden, wobei insbesondere der Sensorwert des optischen Sensors als Referenzwert benutzt werden kann.

Es kann vorgesehen sein, Steuersignale zu erzeugen, die wenigstens eine der folgenden Betriebsänderungen für den Betrieb der Reaktorvorrichtung bewirken: Abschalten der Anordnung von UV-Licht emittierenden Dioden oder zumindest einer der Teilanordnungen hiervon; Dimmen der Anordnung von UV-Licht emittierenden Dioden oder zumindest einer der Teilanordnungen hiervon; Anschalten der Anordnung von UV-Licht emittierenden Dioden oder zumindest einer der Teilanordnungen hiervon; Zuschalten wenigstens einer weiteren Teilanordnung von UV-Licht emittierenden Dioden zu einer bereits eingeschalteten Teilanordnung von UV-Licht emittierenden Dioden; Ändern einer Durchflussmenge des zu desinfizierenden Wassers in dem Reaktorraum mittels einer dem Reaktorraum zugeordneten Durchflussregeleinrichtung, die mit der Steuereinrichtung verbunden ist; und Ein- oder Abschalten einer Umwälzeinrichtung, die eingerichtet ist, dass zu desinfizierende Wasser im Reaktorraum umzuwälzen, und mit der Steuereinrichtung verbunden ist.

Das Dimmen der Anordnung von UV-Licht kann insbesondere in Abhängigkeit einer bestimmten Transmission und/oder Durchflussmenge erfolgen.

Die vorangehend im Zusammenhang mit dem Verfahren zum Desinfizieren des Wassers beschriebenen Ausgestaltungen können in Verbindung mit der Reaktorvorrichtung entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Reaktorvorrichtung zum Desinfizieren von Wasser wie Trinkwasser, Abwasser, Brauchwasser oder Prozesswasser mittels UV-Beleuchtung;
- Fig. 2: eine schematische Detaildarstellung eines Teils der Reaktorvorrichtung aus Fig. 1 mit einer Steuereinrichtung und hiermit verbundenen Einrichtungen und
- Fig. 3: eine schematische Darstellung eines stabförmigen UV-Strahlers mit einer Anordnung von UV-Licht emittierenden Dioden.

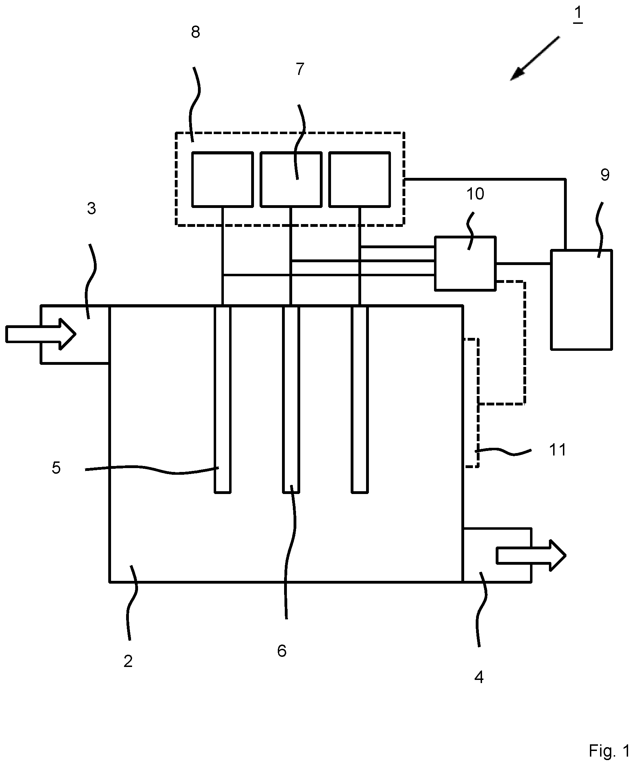

Fig. 1 zeigt eine schematische Darstellung einer Reaktorvorrichtung 1 zum Desinfizieren von Wasser wie Trinkwasser, Abwasser, Brauchwasser, Prozesswasser oder dergleichen mittels UV-Beleuchtung. In einem Reaktorraum 2 wird das zu desinfizierende Wasser über eine Einlass 3 eingebracht. Nach dem Desinfizieren verlässt das Wasser den Reaktorraum 2 über einen Auslass 4. Bei der Reaktorvorrichtung 1 kann es sich um eine großtechnische Anlage zur Desinfektion von Wasser handeln, bei der das zu desinfizierende Wasser mit einem Mindestdurchsatz von etwa 2 m³ pro Stunden durch den Reaktorraum 2 geführt wird.

In dem Reaktorraum 2 wird das Wasser UV-Licht ausgesetzt, also hiermit bestrahlt, welches mit Hilfe einer UV-Beleuchtungseinrichtung 5 bereitgestellt wird, die bei dem dargestellten Ausführungsbeispiel mit drei stabförmigen UV-Strahlern 6 gebildet ist. Die stabförmigen UV-Strahler 6 erstrecken sich zumindest teilweise in den Reaktorraum 2 hinein und werden beim Desinfizieren des Wassers von diesem umspült, so dass das UV-Licht effizient auf das Wasser appliziert wird.

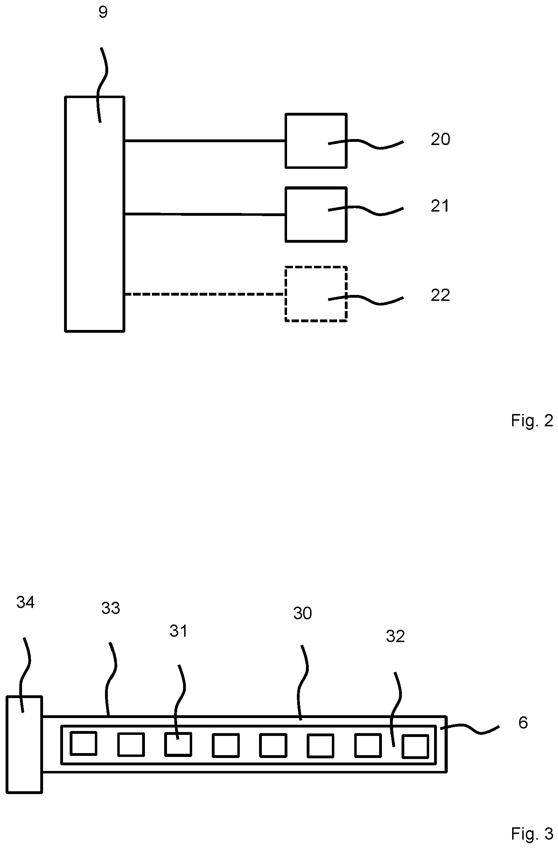

Fig. 3 zeigt eine schematische Darstellung für einen Beispielhaften der UV-Strahler 6, bei dem entlang eines stabförmigen Abschnitts 30 eine Teilanordnung von UV-Licht emittierenden Dioden 31 gebildet, die auf einer Platine 32 angeordnet sind, mit der auch ein Kühlkörper gebildet sein kann, so dass im Betrieb der UV-Licht emittierenden Dioden 31 entstehende Wärme abgeführt wird. Alternativ zu einem gemeinsamen Kühlkörper kann den UV-Licht emittierenden Dioden 31 jeweils individuell ein Kühlkörper zugeordnet sein.

Die Anordnung von UV-Licht emittierenden Dioden 31 ist im Bereich des stabförmigen Abschnitts 30 von einem Hüllrohr 33 umgeben, welches die Abstrahlung des UV-Lichts in den umgebenden Reaktorraum 2 ermöglicht. Beispielsweise ist das Hüllrohr 33 aus Quarzglas.

Der stabförmige Abschnitt 30 ist an einem Sockelabschnitt 34 gebildet, in welchem zum Beispiel eine Verbindungseinrichtung angeordnet sein kann, um elektrische Leitungen anzuschließen.

Es kann vorgesehen sein, dass mittels der Anordnung von UV-Licht emittierenden Dioden 31 UV-Licht in mindestens zwei Richtungen abgestrahlt wird, beispielsweise auf der Vorder- und der Rückseite, wobei dies durch voneinander getrennt gebildete Anordnungen von UV-Licht emittierenden Dioden 31 realisiert wird.

Gemäß Fig. 1 ist den stabförmigen UV-Strahlern 6 eine jeweilige Treiberschaltung 7 zugeordnet, welche eingerichtet ist, die jeweilige Anordnung von UV-Licht emittierenden Dioden 31 der stabförmigen UV-Strahler 6 für die Desinfektion des Wassers zu betreiben. Die Treiberschaltungen 7 können integriert mit einer übergeordneten oder gemeinsamen Treiberschaltung 8 ausgeführt sein, was in Fig. 1 mittels gestrichelter Linien angedeutet ist.

Steuersignale für den Betrieb der stabförmigen UV-Strahler 6 erhalten die Treiberschaltungen 7 von einer Steuereinrichtung 9. Die Steuereinrichtung 9 ist mit einer Überwachungseinrichtung 10 verbunden, welche eingerichtet ist, für die UV-Beleuchtungseinrichtung 5 mindestens einen elektrischen Betriebsparameter zu erfassen. Hierbei kann vorgesehen sein, mindestens einen elektrischen Betriebsparameter jeweils für die stabförmigen UV-Strahler 6 getrennt zu erfassen, also insbesondere für die jeweilige Teilanordnung von UV-Licht emittierenden Dioden des stabförmigen UV-Strahlers 6. Alternativ oder ergänzend kann vorgesehen sein, einen oder mehrere elektrische Betriebsparameter für die Gesamtheit der stabförmigen UV-Strahler 6, also die UV-Beleuchtungseinrichtung 5 zu erfassen. Beispielsweise können mit Hilfe einer oder mehrerer Komparatorschaltungen Strom- und / oder Spannungsmesswerte detektiert werden. Mit Hilfe der Komparatorschaltung(en) können zum Beispiel Über- oder Unterströme in Bezug auf einen Vergleichsstromwert gemessen werden.

Die aktuell erfassten Messwerte werden mit Vergleichswerten verglichen, so dass, vom Ergebnis des Vergleichs abgeleitet, mittels der Steuereinrichtung 9 Steuersignale für den Betrieb der Reaktorvorrichtung 1 erzeugt werden können, insbesondere für den Betrieb der stabförmigen UV-Strahler 6, sei es für die stabförmigen UV-Strahler jeweils einzeln oder insgesamt. Zum Ausführen des Vergleichs können ein oder mehrere Logikschaltungen vorgesehen sein, die beispielsweise zumindest teilweise in die Steuereinrichtung 9 integriert sind.

Auf diese Weise werden für den Betrieb der stabförmigen UV-Strahler 6 direkt charakteristische Betriebsparameter erfasst, insbesondere um sicherzustellen, dass das UV-Licht mit einer vorgegebenen Lichtleistung in das zu desinfizierende Wasser emittiert wird, was nicht mehr der Fall ist, wenn ein Teil der UV-Licht emittierenden Dioden altert oder sogar ganz ausfällt.

Hierbei kann vorgesehen sein, einen Schwellwert für den gemessenen elektrischen Betriebsparameter zu definieren, so dass bei Überschreiten oder Unterschreiten des Schwellwerts ein Warnsignal mittels der Steuereinrichtung 9 erzeugt und über eine hieran koppelnde Ausgabeeinrichtung 20 (vgl. Fig. 2), abgegeben wird. Hierbei kann es sich um ein Video- und / oder Audiosignal handeln, zum Beispiel in einer Überwachungswarte für die Reaktoreinrichtung 1.

Gemäß Fig. 2 ist die Steuereinrichtung 9 bei dem gezeigten Ausführungsbeispiel weiterhin mit einer Datenbank 21 verbunden, mittels welcher zum Beispiel unterschiedliche Vergleichswerte bereitgestellt werden können. Optional kann die Steuereinrichtung 9 mit einer weiteren Einrichtung 22 verbunden sein, zum Beispiel einer Server-Einrichtung, mit der erweiterte Rechenkapazität bereitgestellt werden kann, zum Beispiel beim Auswerten der Messwerte und der Vergleichswerte.

Bei der Reaktorvorrichtung 1 nach Fig. 1 ist die Überwachungseinrichtung 10 optional mit einem optischen Sensor 11 gebildet, mit dem mindestens ein optischer Betriebsparameter beim Desinfizieren des Wassers gemessen werden kann, beispielsweise ein Messwert für die Transmission des UV-Lichts in dem Reaktorraum 2. Hierdurch können zusätzliche Informationen für die Überwachung des korrekten Betriebs der stabförmigen UV-Strahler 6 mittels der Überwachungseinrichtung 10 erfasst werden, die beim Erzeugen der Steuersignale durch die Steuereinrichtung 9 berücksichtigt werden können.

Der optische Sensor 11 kann eingerichtet sein, den optischen Betriebsparameter in einem schmalbandigen Wellenlängenbereich des UV-Lichts zu erfassen, beispielsweise bei einer Messwellenlänge von 254nm. Die gemessene Transmission kann die aktuelle von der UV-Beleuchtungseinrichtung 5 insgesamt oder einzelnen der stabförmigen UV-Strahler 6 abgegebene Lichtleistung anzeigen. Es kann insbesondere eine Lichtintensität (in W/m²) für das UV-Licht in dem zu desinfizierenden Wasser bestimmt werden, beispielsweise zur Bestimmung der Transmission. Die Information über den optischen Betriebsparameter ist hilfreich für die Detektion eines möglichen (Teil-)Ausfalls der UV-Licht emittierende Dioden der stabförmigen UV-Strahler 6.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Desinfizieren von Wasser wie Trinkwasser, Abwasser, Brauchwasser oder Prozesswasser mittels UV-Beleuchtung in einer Reaktorvorrichtung (1), bei dem zu desinfizierendes Wasser über einen Einlass (3) in einem Reaktorraum (2) der Reaktorvorrichtung (1) eingebracht, das zu desinfizierende Wasser in dem Reaktorraum (2) mittels einer UV-Beleuchtungseinrichtung (5) mit UV-Licht beleuchtet und desinfiziertes Wasser über einen Auslass (4) aus dem Reaktorraum (2) abgeführt wird, wobei weiterhin Folgendes vorgesehen ist:
- Bereitstellen des UV-Lichts mittels einer Anordnung von UV-Licht emittierenden Dioden der UV-Beleuchtungseinrichtung (5) der Reaktorvorrichtung (1);
- Betreiben der UV-Licht emittierenden Dioden mittels einer der Anordnung von UV-Licht emittierenden Dioden zugeordneten Treibereinrichtung (7; 8) der Reaktorvorrichtung (1);
- Steuern eines Betriebs der Treibereinrichtung (7; 8) mittels einer Steuereinrichtung (9) der Reaktorvorrichtung (1);
- Überwachen mindestens eines elektrischen Betriebsparameters für die Anordnung von UV-Licht emittierenden Dioden (31) beim Desinfizieren des Wassers mittels des UV-Lichts mit Hilfe einer Überwachungseinrichtung (10) der Reaktorvorrichtung (1), die mit der Steuereinrichtung (9) verbunden ist;
- Vergleichen eines aktuellen Messwertes für den mindestens einen elektrischen Betriebsparameter, welcher mittels der Überwachungseinrichtung (10) erfasst wird, mit einem Vergleichswert für den mindestens einen elektrischen Betriebsparameter;
- Erzeugen von Steuersignalen in Abhängigkeit vom Ergebnis des Vergleichs von aktuellem Messwert und Vergleichswert für den mindestens einen elektrischen Betriebsparameter mittels der Steuereinrichtung (9); und
- Steuern des Betriebs der Reaktorvorrichtung (1) gemäß den Steuersignalen,
wobei eine UV-Beleuchtungseinrichtung (5) verwendet wird, bei der die Anordnung von UV-Licht emittierenden Dioden (31) mehrere Teilanordnungen von UV-Licht emittierenden Dioden (31) aufweist, die einen jeweiligen UV-Strahler bilden und die im Betrieb der UV-Beleuchtungseinrichtung (5) mittels der Treibereinrichtung (7; 8) getrennt voneinander betrieben und mittels der Steuereinrichtung (9) getrennt voneinander gesteuert werden, derart, dass der mindestens eine elektrische Betriebsparameter jeweils getrennt für die mehreren UV-Strahler erfasst wird, sodass eine individuelle Überwachung der jeweiligen Teilanordnung von UV-Licht emittierenden Dioden (31) ermöglicht ist, und die Steuereinrichtung (9) individuelle Steuersignale für die jeweilige Teilanordnung von UV-Licht emittierenden Dioden (31) getrennt erzeugt.

2. Verfahren nach Anspruch 1, **dadurch gekennzeichnet, dass** eine UV-Beleuchtungseinrichtung (5) verwendet wird, bei der die Anordnung von UV-Licht emittierenden Dioden (31) an einem stabförmigen UV-Strahler ausgebildet ist, wobei ein Strahlerabschnitt mit der Anordnung von UV-Licht emittierenden Dioden (31) zumindest abschnittsweise in das zu desinfizierende Wasser in dem Reaktorraum (2) eintauchend angeordnet wird.

3. Verfahren nach mindestens einem der vorangehenden Ansprüche, dadurch **gekenn**z e i c h n e t, dass beim Überwachen des mindestens einen elektrischen Betriebsparameters ein Strom- und / oder ein Spannungsmesswert für die Anordnung von UV-Licht emittierenden Dioden (31) erfasst wird, welcher mit einem Strom- / Spannungsvergleichswert verglichen wird.

4. Verfahren nach mindestens einem der vorangehenden Ansprüche, **dadurch gekennzeichnet, dass** zum Überwachen des mindestens einen elektrischen Betriebsparameters und zum Vergleichen des aktuellen Messwerts eine Schaltungsanordnung mit einer Komparatorschaltung und einer Logikschaltung verwendet wird.

5. Verfahren nach mindestens einem der vorangehenden Ansprüche, **dadurch gekennzeichnet, dass** während des Betriebs der UV-Beleuchtungseinrichtung (5) beim Überwachen der mindestens einen elektrischen Betriebsparameters für die Anordnung von UV-Licht emittierenden Dioden (31) fortdauernd erfasst wird.

6. Verfahren nach mindestens einem der vorangehenden Ansprüche, **dadurch gekennzeichnet, dass** beim Vergleichen des aktuellen Messwertes mit dem Vergleichswert bestimmt wird, welcher Anteil der UV-Licht emittierenden Dioden (31) der Anordnung nicht mehr funktionsfähig sind.

7. Verfahren nach mindestens einem der vorangehenden Ansprüche, **dadurch gekennzeichnet, dass** beim Vergleichen des aktuellen Messwertes mit dem Vergleichswert bestimmt wird, ob der aktuelle Messwert einen Vergleichsschwellwert überschreitet oder unterschreitet, und ein Warnsignal erzeugt und über eine Ausgabeeinrichtung ausgegeben wird, welches eine Fehlfunktion der UV-Beleuchtungseinrichtung (5) anzeigt.

8. Verfahren nach mindestens einem der vorangehenden Ansprüche, **dadurch gekennzeichnet, dass** die Reaktorvorrichtung (1) eine großtechnische Einrichtung zur Desinfektion von Wasser ist und das zu desinfizierende Wasser mit einem Mindestdurchsatz von etwa 2 m³ / h durch den Reaktorraum (2) geführt wird.

9. Verfahren nach mindestens einem der vorangehenden Ansprüche, dadurch **gekenn- zeichnet**, dass
- mit der Überwachungseinrichtung (10) zusätzlich zu dem elektrischen Betriebsparametern ein optischer Betriebsparameter erfasst wird, welcher für die Wellenlänge des UV-Lichts der UV-Licht emittierenden Dioden (31) die Transmission in dem zu desinfizierenden Wasser anzeigt;
- ein aktueller Transmissionsmesswert mit einem Vergleichs-Transmissionswert verglichen wird und
- die Steuersignale in Abhängigkeit vom Ergebnis des Vergleichs von aktuellem Transmissionsmesswert und Vergleichs-Transmissionswert erzeugt werden.

10. Verfahren nach mindestens einem der vorangehenden Ansprüche, **dadurch gekennzeichnet, dass** Steuersignale erzeugt werden, die wenigstens eine der folgenden Betriebsänderungen für den Betrieb der Reaktorvorrichtung (1) bewirken:
- Abschalten der Anordnung von UV-Licht emittierenden Dioden (31) oder zumindest einer der Teilanordnungen hiervon;
- Dimmen der Anordnung von UV-Licht emittierenden Dioden (31) oder zumindest einer der Teilanordnungen hiervon;
- Anschalten der Anordnung von UV-Licht emittierenden Dioden (31) oder zumindest einer der Teilanordnungen hiervon;
- Zuschalten wenigstens einer weiteren Teilanordnung von UV-Licht emittierenden Dioden (31) zu einer bereits eingeschalteten Teilanordnung von UV-Licht emittierenden Dioden (31);
- Ändern einer Durchflussmenge des zu desinfizierenden Wassers in dem Reaktorraum (2) mittels einer dem Reaktorraum (2) zugeordneten Durchflussregeleinrichtung, die mit der Steuereinrichtung (9) verbunden ist; und
- Ein- oder Abschalten einer Umwälzeinrichtung, die eingerichtet ist, dass zu desinfizierende Wasser im Reaktorraum (2) umzuwälzen, und mit der Steuereinrichtung (9) verbunden ist.

11. Reaktorvorrichtung (1) zum Desinfizieren von Wasser wie Trinkwasser, Abwasser, Brauchwasser oder Prozesswasser mittels UV-Beleuchtung, mit:
- einem Reaktorraum (2) zum Aufnehmen von zu desinfizierendem Wasser;
- einer UV-Beleuchtungseinrichtung (5) mit einer Anordnung von UV-Licht emittierenden Dioden (31) zum UV-Beleuchten des zu desinfizierenden Wassers in dem Reaktorraum (2);
- einer Treibereinrichtung (7; 8), die der Anordnung von UV-Licht emittierenden Dioden (31) zugeordnet ist;
- einer Überwachungseinrichtung (10) und
- einer Steuereinrichtung (9), die mit der Überwachungseinrichtung (10) und der Treibereinrichtung (7; 8) verbunden ist;
wobei die Reaktorvorrichtung (1) für Folgendes eingerichtet ist:
- Zuführen des zu desinfizierenden Wassers über einen Einlass (3) in dem Reaktorraum (2), Beleuchten des zu desinfizierenden Wassers mit UV-Licht in dem Reaktorraum (2) mittels der UV-Beleuchtungseinrichtung (5) und Abführen von desinfiziertem Wasser über einen Auslass (4) aus dem Reaktorraum (2);
- Bereitstellen des UV-Lichts mittels der Anordnung von UV-Licht emittierenden Dioden (31);
- Betreiben der UV-Licht emittierenden Dioden (31) mittels der zugeordneten Treibereinrichtung (7; 8);
- Steuern eines Betriebs der Treibereinrichtung (7; 8) mittels der Steuereinrichtung (9);
- Überwachen mindestens eines elektrischen Betriebsparameters für die Anordnung von UV-Licht emittierenden Dioden (31) beim Desinfizieren des Wassers mittels des UV-Lichts mit Hilfe der Überwachungseinrichtung (10);
- Vergleichen eines aktuellen Messwertes für den mindestens einen elektrischen Betriebsparameter, welcher mittels der Überwachungseinrichtung (10) erfasst wird, mit einem Vergleichswert für den mindestens einen elektrischen Betriebsparameter;
- Erzeugen von Steuersignalen in Abhängigkeit vom Ergebnis des Vergleichs von aktuellem Messwert und Vergleichswert für den mindestens einen elektrischen Betriebsparameter; und
- Steuern des Betriebs der Reaktorvorrichtung (1) gemäß den Steuersignalen,
wobei eine UV-Beleuchtungseinrichtung (5) bereitgestellt ist, bei der die Anordnung von UV-Licht emittierenden Dioden (31) mehrere Teilanordnungen von UV-Licht emittierenden Dioden (31) aufweist, die einen jeweiligen UV-Strahler bilden und die im Betrieb der UV-Beleuchtungseinrichtung (5) mittels der Treibereinrichtung (7; 8) getrennt voneinander betreibbar und mittels der Steuereinrichtung (9) getrennt voneinander steuerbar sind, derart, dass der mindestens eine elektrische Betriebsparameter jeweils getrennt für die mehreren UV-Strahler erfassbar ist, sodass eine individuelle Überwachung der jeweiligen Teilanordnung von UV-Licht emittierenden Dioden (31) ermöglicht ist, und die die Steuereinrichtung (9) eingerichtet ist, individuelle Steuersignale für die jeweilige Teilanordnung von UV-Licht emittierenden Dioden (31) getrennt zu erzeugen.
